# EUROPEAN PATENT SPECIFICATION

(11) **EP 2 408 657 B1**
(45) Date of publication and mention of the grant of the patent: **05.08.2015**
(21) Application number: 10753768.0
(22) Date of filing: 15.03.2010
(51) Int. Cl.: B62D 47/02, B62D 53/08, B60D 5/00

(54) **DAMPING SYSTEM FOR ARTICULATED VEHICLE AND METHOD FOR REGULATING THE DAMPING FORCE OF SUCH A DAMPING SYSTEM**
DÄMPFUNGSSYSTEM FÜR GELENKWAGEN SOWIE VERFAHREN ZUR REGELUNG DER DÄMPFUNGSKRAFT EINES DERARTIGEN DÄMPFUNGSSYSTEMS
SYSTÈME D'AMORTISSEMENT POUR VÉHICULE ARTICULÉ ET PROCÉDÉ DE RÉGULATION DES FORCES D'AMORTISSEMENT D'UN TEL SYSTÈME D'AMORTISSEMENT

(30) Priority: 18.03.2009 SE 0900344
(43) Date of publication of application: 25.01.2012
(73) Proprietor: Scania CV AB (publ), 151 87 Södertälje (SE)
(72) Inventor: ROBERTSSON, Oscar, S-115 43 Stockholm (SE); CROMNOW, Crister, S-641 47 Katrineholm (SE); LYBERGER, Rickard, S-155 31 Nykvarn (SE); LAANEN, Frederik, S-151 46 Södertälje (SE); JONSSON, Dan, S-152 57 Södertälje (SE)
(74) Representative: Scania CV AB
(86) International application number: PCT/SE2010/050280
(87) International publication number: WO 2010/107370

(56) References cited:
- EP-A1- 0 233 850
- EP-A1- 0 233 850
- EP-A1- 0 516 972
- WO-A1-84/00730
- WO-A1-2008/073045
- DE-A1- 4 031 626
- GB-A- 2 069 428
- GB-A- 2 069 428
- GB-A- 2 082 523
- US-A- 4 991 863

## Description

### FIELD OF THE INVENTION, AND STATE OF THE ART

The present invention relates to a damping system according to the preamble of claim 1 for counteracting mutual pivoting movement between a forward vehicle element of an articulated vehicle and a rear vehicle element connected to the forward vehicle element by an articulated coupling, and a method for regulating the damping force of such a damping system. The invention relates also to a computer programme product comprising computer programme code for implementing a method according to the invention, and an electronic control unit.

In this description and the claims set out below, articulated vehicle means a vehicle which comprises a forward vehicle element and a rear vehicle element which are pivotably connected to one another by an articulated coupling which is intended to allow these vehicle elements to pivot relative to one another about a vertical pivot axis. In this description and the claims set out below, the angle between the forward vehicle element and the rear vehicle element of the articulated vehicle, as seen in plan view across the vehicle, is called "articulation angle". This articulation angle may for example be defined as the angle between the longitudinal axis of the rear vehicle element and the longitudinal axis of the forward vehicle element.

In an articulated vehicle in the form of an articulated bus, the driving engine with associated transmission is often situated at the rear end of the rear vehicle element. This means that the forward vehicle element is pushed on by the rear vehicle element when the articulated bus moves forwards under the action of the driving engine, which may entail difficult driving characteristics which differ markedly from the driving characteristics of non-articulated vehicles and articulated vehicles in which the forward vehicle element serves as a tractor unit. If the vehicle elements can pivot too freely relative to one another, i.e. if the articulated coupling is too weakly damped, there is risk that the rear vehicle element may push a middle portion of the vehicle out sideways and the vehicle may also become unstable because of oversteering when travelling at high speed. If instead the articulated coupling is strongly damped, the vehicle becomes understeered and it may then become difficult to turn the vehicle as desired, e.g. at a road bend or road junction, while at the same time the vehicle may become difficult to straighten up after a turn. To prevent these problems, damping systems with adjustable damping force which varies according to current driving conditions in order thereby to provide a damping force which is appropriate to prevailing driving conditions have been developed and brought into use. In such adjustable damping systems, the magnitude of the damping force is usually controlled on the basis of the vehicle's speed and the articulation angle and/or the articulation angle velocity.

A damping system according to the preamble of claim 1 is previously known from, for example, EP 0233850, GB 2 069 428 A, WO 2008/073045 A1 and US 4 756 543 A.

### OBJECT OF THE INVENTION

The object of the present invention is to provide a novel and advantageous way of regulating the damping force of a damping system for an articulated vehicle.

### SUMMARY OF THE INVENTION

According to the present invention, said object is achieved by a damping system having the features defined in claim 1 and a method having the features defined in claim 7.

In a normal state, when there is deemed to be no risk situation with regard to mutual outswing between the forward vehicle element and the rear vehicle element, the respective damping means of the damping system are caused to exert a damping force which is pulsated, in order thereby to facilitate mutual straightening up between the forward vehicle element and the rear vehicle element after outswing of either of these vehicle elements relative to the other. When it is found that there is a risk situation with regard to mutual outswing between the forward vehicle element and the rear vehicle element, the respective damping means are caused to exert a damping force which is non-pulsated and more powerful than the damping force in the normal state, in order thereby temporarily to prevent the articulation angle from increasing, after which the respective damping means are caused to revert to the normal state with pulsated damping force of reduced strength.

The damping means exerting a pulsated damping force in the normal state facilitates desired straightening up of the vehicle, e.g. when the vehicle has negotiated a road bend, pulled out from a stopping place, changed lane on a multi-lane road or turned at a road junction, while at the same time good damping characteristics can be maintained to prevent instability of the vehicle due to oversteering. The cessation of pulsation of the damping force upon detection of a risk situation, with simultaneous increase in the damping force, ensures at the same time good safety function in critical driving situations.

According to an embodiment of the invention, the respective damping means are controlled in such a way that at the time of return to normal state the damping force of the respective damping means is reduced gradually and is at the same time pulsated. Having the damping force reduce gradually results in a smooth transition from "emergency state" with powerful damping to normal state with reduced damping, and a rapid transition from understeering to oversteering is thereby prevented, resulting in good driving comfort. Desired straightening up of the vehicle is also facilitated by the damping means exerting a pulsated damping force during the gradual return to normal state.

According to another embodiment of the invention, the damping system comprises two damping means situated close to the articulated coupling on the respective sides of the vehicle's longitudinal axis, and in said normal state the control device is adapted to causing the damping means to pulsate with mutually displaced damping force pulses so that only one damping means at a time is in an inactive state between two damping force pulses. Good balance of the damping system during pulsation of the damping force is thus ensured while at the same time always maintaining a certain damping.

Other advantageous features of the damping system and the method according to the invention are indicated by the independent claims and the description set out below.

The invention relates also to a computer programme product having the features defined in claim 12 and an electronic control unit having the features defined in claim 14.

### BRIEF DESCRIPTION OF THE DRAWINGS

The invention is described in more detail below on the basis of embodiment examples with reference to the attached drawings, in which:
- Fig.1: is a schematic plan view of an articulated bus provided with a damping system according to the present invention,
- Fig. 2: is a perspective view of an articulated coupling for an articulated vehicle with associated damping means,
- Fig. 3: is a diagram of the damping force of two damping means forming part of a damping system according to the invention,
- Fig. 4: is a schematic diagram of an electronic control unit for implementing a method according to the invention, and
- Fig. 5: is a flowchart illustrating a method according to an embodiment of the invention.

### EMBODIMENTS OF THE INVENTION

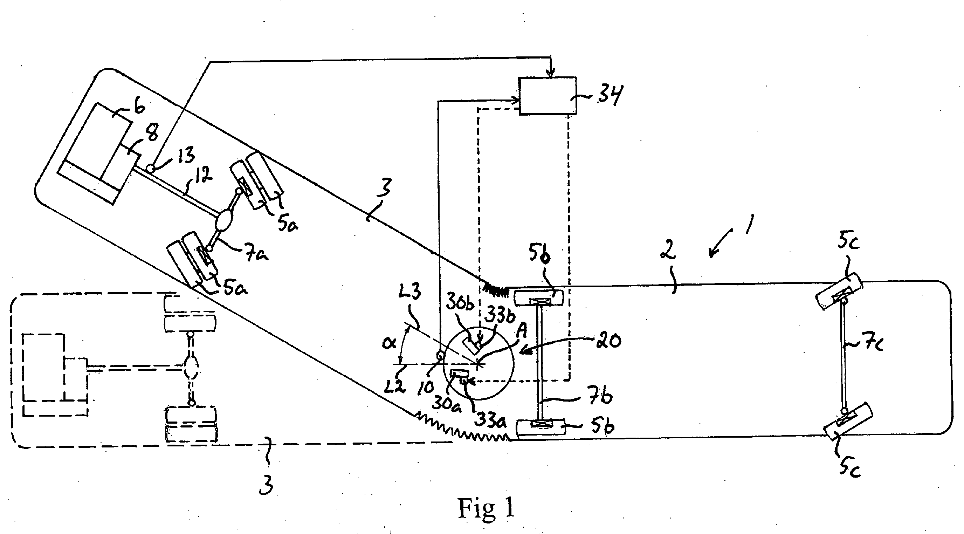

An articulated vehicle 1 provided with a damping system according to the present invention is illustrated schematically in Fig. 1. In the example illustrated, the vehicle takes the form of an articulated bus. The vehicle comprises a forward vehicle element 2 and a rear vehicle element 3 which is pivotably connected to said forward vehicle element via an articulated coupling 20. The vehicle elements 2, 3 are pivotable relative to one another about a vertical pivot axis A. In the example illustrated, the rear vehicle element 3 is provided at its rear end with a set of powered wheels 5A driven by a vehicle engine 6 situated in the rear vehicle element 3. The vehicle engine 6 is connected to the wheelshaft 7a of the powered wheels via a gearbox 8. In the example illustrated, the powered wheels 5a are steerable but might alternatively be non-steerable. The forward vehicle element 2 has at its forward end a forward wheelshaft 7c provided with two pivotable wheels 5c. At its rear end the forward vehicle element 2 has a wheelshaft 7b which represents the vehicle's centreline and which in the example illustrated is provided with two non-pivotable wheels 5b. In the example illustrated, the wheels 5b, 5c of the forward vehicle element 2 are unpowered.

The vehicle 1 can pivot from a straight state with the longitudinal axis L3 of the rear vehicle element 3 in line with the longitudinal axis L2 of the forward vehicle element 2, as illustrated with the rear vehicle element 3 depicted in broken lines in Fig. 1, to an angled state with the longitudinal axis L3 of the rear vehicle element 3 at an angle to the longitudinal axis L2 of the forward vehicle element 2, as illustrated by unbroken lines in Fig. 1. An articulation angle α̇ is defined between the longitudinal axis L3 of the rear vehicle element 3 and the longitudinal axis L2 of the forward vehicle element 2 when the rear vehicle element 3 is swung out relative to the forward vehicle element 2, as illustrated in Fig.1. The articulation angle α̇ is measured by an angle-measuring device 10 which may comprise an angle sensor of conventional type. The angle sensor is preferably adapted to generating a measurement signal at such a frequency, e.g. about 100Hz or higher, that it becomes possible to determine the rate of change of the articulation angle α̇, i.e. the articulation angle velocity a, on the basis of the measured values from the angle sensor.

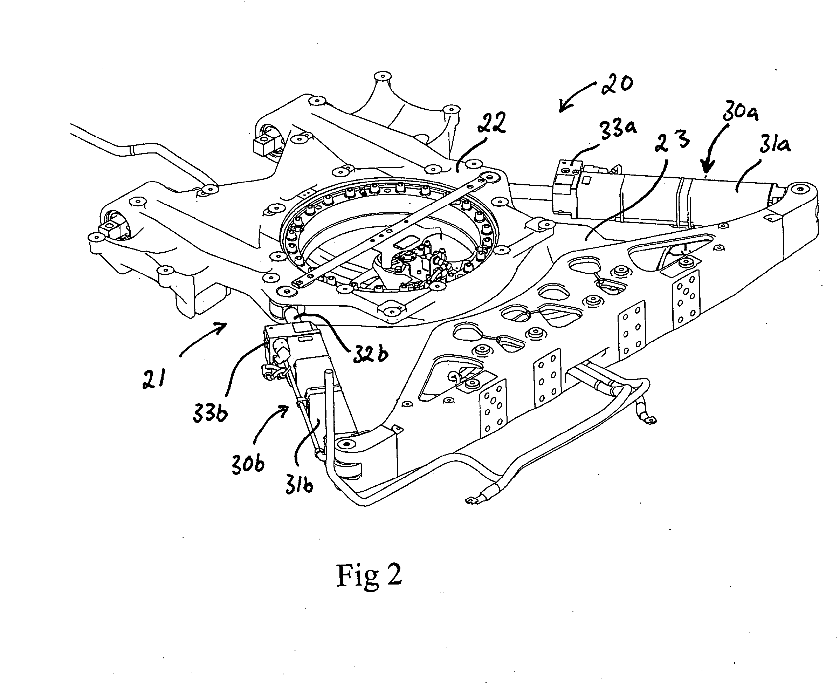

Fig. 2 illustrates a conceivable embodiment of the articulated coupling 20 of the vehicle according to Fig. 1. The articulated coupling 20 comprises a turntable 21 comprising a first element 22 which is fastened to the forward vehicle element (not depicted in Fig. 2) and a second element 23 which is fastened to the rear vehicle element (not depicted in Fig. 2) and is pivotable relative to the first element 22 about a vertical pivot axis.

The vehicle 1 comprises a damping system configured to counteract the mutual pivoting movement between the forward vehicle element 2 and the rear vehicle element 3. The damping system comprises one or more damping means 30a, 30b situated close to the articulated coupling 20. The respective damping means 30a, 30b are adapted to exerting an adjustable damping force which counteracts mutual pivoting movement between the forward vehicle element 2 and the rear vehicle element 3. Each damping means 30a, 30b takes with advantage the form of a hydraulic damping cylinder. By adjusting the hydraulic pressure applied to it, the damping force of the damping cylinder can be controlled so as to provide a damping force appropriate to prevailing driving conditions.

In the embodiment according to Figs. 1 and 2, the damping system comprises two hydraulic damping cylinders 30a, 30b situated exactly opposite one another on the respective sides of the vehicle's longitudinal axis. In the example illustrated, each damping cylinder 30a, 30b has a cylinder element 31 a, 31 b which is articulatedly fastened to the second turntable element 23 and is thus articulatedly connected to the rear vehicle element 3, and a piston which is accommodated in, and movable relative to, this cylinder element and which has a piston rod 32a, 32b which is articulatedly fastened to the first turntable element 22 and is thus articulatedly connected to the forward vehicle element 2.

As mentioned above, the damping force of each damping cylinder is controlled by regulating its hydraulic pressure. This hydraulic pressure is regulated by a regulating means 33a, 33b of a suitable type, e.g. in the form of an electrically controlled proportional valve whereby the resulting hydraulic pressure depends on the voltage or amperage of the electrical control current applied to the proportional valve.

The damping system further comprises an electronic control device 34 which is adapted to regulating the control current to the regulating means 33a, 33b and thereby controls the damping force of the damping means 30a, 30b. The control device 34 is programmed to control the damping force of the damping means 30a, 30b on the basis of a number of parameters which are related to prevailing driving conditions. The control device 34 is adapted to controlling the damping force of the damping means on the basis of at least the vehicle's speed and one or more parameters related to the articulation angle α, e.g. the magnitude of the articulation angle, the articulation angle velocity α̇ and/or the articulation angle acceleration α̈.

The control device 34 is further adapted to using one or more of said parameters related to the articulation angle α, possibly in combination with one or more further parameters, e.g. the vehicle's speed and/or the wheel speed of one or more of the vehicle's wheels, to determine whether there is a risk situation with regard to mutual outswing between the forward vehicle element 2 and the rear vehicle element 3. Risk situation means here a driving situation in which the mutual outswing between the forward vehicle element 2 and the rear vehicle element 3 is of such a character that driving safety is jeopardised.

According to an embodiment, the control device 34 is adapted to determining or receiving an articulation angle velocity value V_{α̇} which represents the articulation angle velocity α̇ and to comparing this articulation angle velocity value V_{α̇} with a limit value V_{G}, the magnitude of which depends on the speed of the vehicle, and the control device 34 is adapted to finding that there is a risk situation of the kind indicated above when the prevailing articulation angle velocity value V_{α̇} exceeds the limit value V_{G} prevailing at current vehicle speed.

In a normal state, when there is no risk situation of the kind indicated above, the control device 34 is adapted to causing the respective damping means 30a, 30b to exert a damping force which is pulsated, in order thereby to facilitate mutual straightening up between the forward vehicle element 2 and the rear vehicle element 3 after outswing of either of these vehicle elements relative to the other. The control device 34 is further adapted to changing over from said normal state to an emergency state when it is found that there is a risk situation of the kind indicated above, whereupon the control device 34 will cause the respective damping means 30a, 30b to exert a damping force which is non-pulsated and stronger than the damping force in the normal state, in order thereby temporarily to prevent the articulation angle α between the forward vehicle element 2 and the rear vehicle element 3 from increasing. When the control device 34 finds that the risk situation has been eliminated, e.g. by the vehicle's speed and/or the articulation angle velocity having decreased, the control device is adapted to causing the damping means 30a, 30b to revert to the normal state with pulsated damping force of reduced strength.

The control device 34 may for example be adapted to initiating return to normal state after it finds that the aforesaid articulation angle velocity value V_{α̇} is below the aforesaid limit value V_{G}. The articulation angle velocity value V_{α̇} again becoming lower than the limit value V_{G} may be due to the articulation angle velocity value V_{α̇} having dropped and/or the limit value V_{G}, as a result of a reduction in the vehicle speed, having increased after the risk situation was detected.

The control device 34 is with advantage adapted to controlling the respective damping means 30a, 30b in such a way that the damping force of the respective damping means at the time of return to normal state is reduced gradually and is at the same time pulsated.

In the case where the damping system comprises two damping means 30a, 30b situated on the respective sides of the vehicle's longitudinal axis, they are with advantage caused to pulsate asynchronously with mutually displaced damping force pulses so that only one damping means at a time is in an inactive state between two damping force pulses in the aforesaid normal state and during return to normal state. Alternatively, the damping means might be caused to pulsate synchronously with damping force pulses coinciding in time so that the two damping means are simultaneously in an inactive state between two damping force pulses. Where the damping system comprises two or more damping cylinders, they might also be controlled entirely independently of one another.

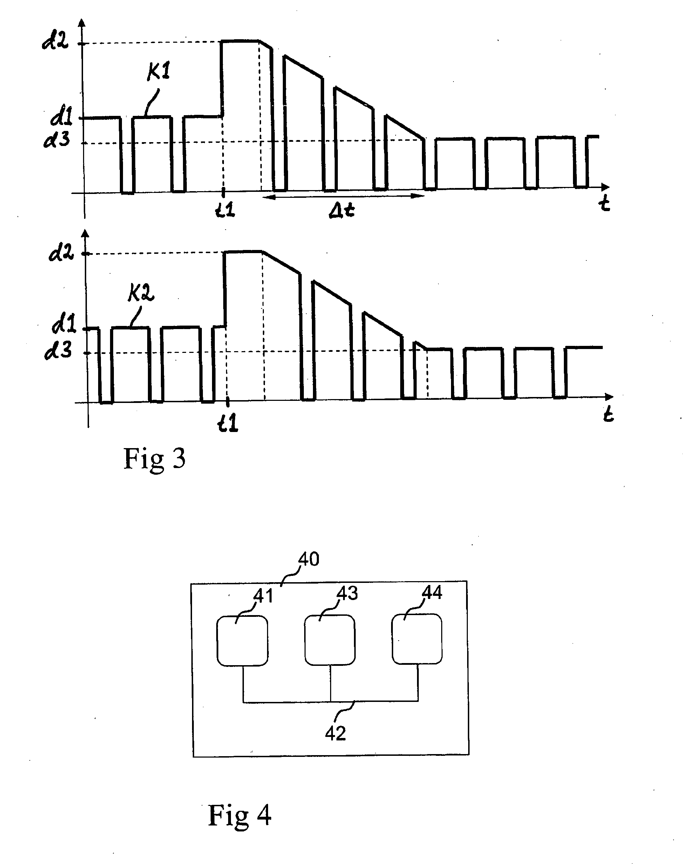

Fig. 3 depicts an example of how the damping forces of the two damping means might vary in time upon detection of a risk situation. The damping force of the one damping means 30a is illustrated by the curve K1 in the upper diagram in Fig. 3, while the damping force of the other damping means 30b is illustrated by the curve K2 in the lower diagram. In the normal state, before any risk situation is detected, the damping force of the damping means is pulsated and the damping force pulses of one damping means are displaced in time relative to the damping force pulses of the other damping means so that an inactive state between two damping force pulses of one damping means always occurs when the other damping means is active and applying a damping force. The damping force of the damping means will vary during this pulsation between zero or a value close to zero and a level d1 which depends on the speed of the vehicle. In the example illustrated, the time interval between two damping force pulses is one-third of the length of time of each damping force pulse, which means that each damping means is active 75% of the time and inactive 25% of the time. The damping force pulses might of course also conform to some other time relationship than this. The length of time of each damping force pulse might for example be 0.75 second, which in the example illustrated would mean that the time interval between two damping force pulses would be 0.25 second. The damping force pulses might of course also conform to some other lengths of time than these.

When a risk situation is detected at the time t1, the damping force of the respective damping means is increased strongly and quickly from the level d1 to a higher level d2 which depends on the speed of the vehicle, and at the same time the pulsation of the damping force ceases. The damping force remains at the higher level d2 until it is detected that the risk situation has ceased, after which the damping force of the respective damping means will be ramped down from the higher level d2 to a lower level d3 which depends on the speed of the vehicle. During and after the down-ramping, the damping force of the respective damping means is pulsated in the manner described above. If the speed of the vehicle after the down-ramping differs from its speed before the detection of the risk situation, the damping force of the respective damping means after the down-ramping may be at a level which differs from the level before the detection of the risk situation, as illustrated in Fig. 3. The length of time Δt of the down-ramping is determined with advantage by the control device 34 on the basis of the speed of the vehicle and might for example range between 1 and 3 seconds depending on the vehicle speed.

The control device 34 is with advantage adapted to initiating the return to normal state, i.e. the start of the aforesaid down-ramping, with a short time lag after the time at which the control device finds that the risk situation has ceased. The control device 34 may for example be adapted to initiating the return to normal state with a certain time lag from the time at which the control device finds that the aforesaid articulation angle velocity value V_{α̇} is below the aforesaid limit value V_{G}. The magnitude of the time lag may vary, e.g. between 0.25 and 0.5 second, depending on the speed of the vehicle.

Information about the prevailing speed of the vehicle 1 may be supplied to the control device 34 directly from a sensor adapted to detecting the vehicle speed or from a control unit connected to such a sensor. The speed of the vehicle may for example be estimated on the basis of measured values for the rotation speed of some part of the vehicle's driveshaft, e.g. the output shaft 12 of the gearbox 8, or on the basis of measured values for the running speed of one or more of the vehicle's wheels. In the example illustrated in Fig. 1, the speed of the vehicle is determined by means of a sensor 13 adapted to generating a value which represents the rotation speed of the gearbox output shaft 12.

The control device 34 may comprise a single electronic control unit of the vehicle, as illustrated in Fig. 1, or two or more mutually cooperating electronic control units.

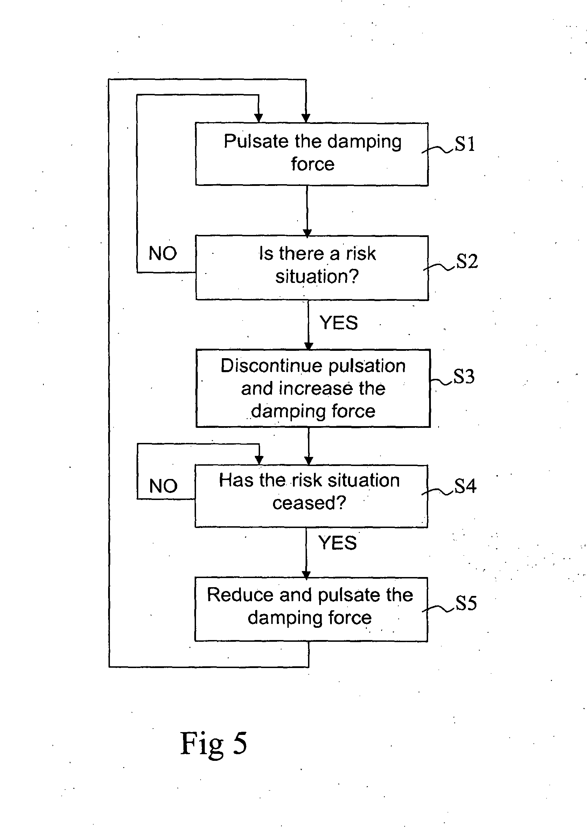

Fig. 5 depicts a flowchart illustrating an embodiment of a method according to the present invention for regulating the force by which a damping system of the type described above counteracts mutual pivoting movement between a forward vehicle element of an articulated vehicle and a rear vehicle element which is connected to the forward vehicle element via an articulated coupling. At a first step S1 the electronic control device 34 of the damping system causes the damping means 30a, 30b which form part of the damping system to exert a pulsated damping force at a magnitude which depends on the vehicle speed. At a second step S2 the electronic control device 34 of the damping system determines, on the basis of one or more parameters related to the articulation angle α between the forward vehicle element and the rear vehicle element, possibly in combination with one or more further parameters, whether there is a risk situation with regard to mutual outswing between the forward vehicle element and the rear vehicle element. If at step S2 it is found that there is no such risk situation, steps S1 and S2 are repeated with a certain time lag. If at step S2 it is found that there is such a risk situation, the control device 34, at a third step S3, causes the damping means 30a, 30b to exert a damping force which is non-pulsated and stronger than the damping force at step S1, in order thereby temporarily to prevent the articulation angle α between the forward vehicle element and the rear vehicle element from increasing. Thereafter the control device 34 determines at a fourth step S4 whether the risk situation has ceased or not. If at step S4 it is found that the risk situation has not ceased, step S4 is repeated with a certain time lag. If at step S4 it is found that the risk situation has ceased, the damping force of the damping means 30a, 30b is reduced gradually at a fifth step S5 and is at the same time pulsated. Thereafter the process reverts to step S1.

Computer programme code for implementing a method according to the invention is with advantage included in a computer programme which can be read into the internal memory of a computer, e.g. the internal memory of an electronic control unit of an articulated vehicle provided with a damping system of the type described above. Such a computer programme is with advantage provided via a computer programme product comprising a data storage medium which is readable by an electronic control unit and which has the computer programme stored on it. Said data storage medium is for example an optical data storage medium in the form of a CD ROM disc, a DVD disc etc, a magnetic data storage medium in the form of a hard disc, a diskette, a cassette tape etc, or a flash memory or a memory of the ROM, PROM, EPROM or EEPROM type.

A computer programme according to an embodiment of the invention comprises computer programme code for causing an electronic control device 34 of an articulated vehicle provided with a damping system of the type described above to:
- control the damping force of the respective damping means 30a, 30b on the basis of at least the speed of the vehicle and one or more parameters related to the articulation angle α between the forward vehicle element 2 and the rear vehicle element 3,
- to determine, on the basis of one or more parameters related to the articulation angle α between the forward vehicle element 2 and the rear vehicle element 3, possibly in combination with one or more parameters, whether there is a risk situation with regard to mutual outswing between the forward vehicle element 2 and the rear vehicle element 3,
- in a normal state, when there is no such risk situation, to cause the respective damping means 30a, 30b to exert a damping force which is pulsated, in order thereby to facilitate mutual straightening up between the forward vehicle element 2 and the rear vehicle element 3 after outswing of either of these vehicle elements relative to the other, and
- when it is established that there is such a risk situation, to cause the respective damping means 30a, 30b to exert a damping force which is non-pulsated and stronger than the damping force in the normal state, in order thereby temporarily to prevent the articulation angle α between the forward vehicle element and the rear vehicle element from increasing, and thereafter to cause the respective damping means 30a, 30b to revert to the normal state with pulsated damping force of reduced strength.

Fig. 4 illustrates very schematically an electronic control unit 40 comprising an execution means 41, e.g. a central processor unit (CPU), for execution of computer software. The execution means 41 communicates with a memory 43, e.g. of the RAM type, via a data bus 42. The control unit 40 comprises also a data storage medium 44, e.g. in the form of a flash memory or a memory of the ROM, PROM, EPROM or EEPROM type. The execution means 41 communicates with the data storage means 44 via the data bus 42. A computer programme comprising computer programme code for implementing a method according to the invention, e.g. in accordance with the embodiment illustrated in Fig. 5, is stored on the data storage medium 44.

The invention is of course in no way limited to the embodiments described above, since a multiplicity of possibilities for modifications thereof are likely to be obvious to a specialist in the field without having for that purpose to deviate from the basic concept of the invention such as defined in the attached claims. For example, the damping system might comprise pneumatic damping cylinders instead of hydraulic. The damping system might also comprise a single damping means in the form of a hydraulic or pneumatic damping cylinder disposed transversely to the vehicle's longitudinal axis, e.g. in the manner depicted in EP 0 253 964 A2.

## Claims

1. A damping system for counteracting mutual pivoting movement between a forward vehicle element of an articulated vehicle and a rear vehicle element which is connected to the forward vehicle element via an articulated coupling, which damping system comprises:
- one or more damping means (30a, 30b) situated close to the articulated coupling and adapted to exerting an adjustable damping force which counteracts mutual pivoting movement between the forward vehicle element and the rear vehicle element, and
- an electronic control device (34) for controlling the damping force of the respective damping means (30a, 30b) on the basis of at least the speed of the vehicle and one or more parameters related to the articulation angle (α) between the forward vehicle element and the rear vehicle element,
**characterised in that**:
- the control device (34) is adapted to determining, on the basis of one or more parameters related to the articulation angle (α) between the forward vehicle element and the rear vehicle element, possibly in combination with one or more further parameters, whether there is a risk situation with regard to mutual outswing between the forward vehicle element and the rear vehicle element,
- in a normal state, when there is no such risk situation, the control device (34) is adapted to causing the respective damping means (30a, 30b) to exert a damping force which is pulsated, in order thereby to facilitate mutual straightening up between the forward vehicle element and the rear vehicle element after outswing of either of these vehicle elements relative to the other, and
- the control device (34), when it finds that there is such a risk situation, is adapted to causing the respective damping means (30a, 30b) to exert a damping force which is non-pulsated and stronger than the damping force in the normal state, in order thereby temporarily to prevent the articulation angle (α) between the forward vehicle element and the rear vehicle element from increasing, and thereafter to cause the respective damping means (30a, 30b) to revert to the normal state with pulsated damping force of reduced strength.

2. A damping system according to claim 1 , **characterised in that** the control device (34) is adapted to controlling the respective damping means (30a, 30b) in such a way that the damping force at the time of return to normal state is reduced gradually and is at the same time pulsated.

3. A damping system according to claim 2, **characterised in that** the control device (34) is adapted to determining the length of time (Δt) for said gradual reduction of the damping force of the respective damping means (30a, 30b) on the basis of the speed of the vehicle, which length of time is preferably between 1 and 3 seconds.

4. A damping system according to any one of claims 1-3, **characterised in that**:
- the control device (34) is adapted to determining or receiving an articulation angle velocity value (V_{α̇}) representing the angular velocity between the forward vehicle element and the rear vehicle element and compares this articulation angle velocity value (V_{α̇}) with a limit value (V_{G}), the magnitude of which depends on the speed of the vehicle, and
- the control device (34) is adapted to finding that there is said risk situation when said articulation angle velocity value (V_{α̇}) exceeds said limit value (V_{G}).

5. A damping system according to claim 4, **characterised in that** the control device (34) is adapted to initiating return to normal state after it finds that said articulation angle velocity value (V_{α̇}) is lower than said limit value (V_{G}).

6. A damping system according to any one of claims 1-5, **characterised in that**:
- the damping system comprises two damping means (30a, 30b) situated close to the articulated coupling on the respective sides of the vehicle's longitudinal axis, and
- in said normal state the control device (34) is adapted to causing the damping means (30a, 30b) to pulsate with mutually displaced damping force pulses so that only one damping means at a time is in an inactive state between two damping force pulses.

7. A method for regulating the force by which a damping system of an articulated vehicle (1) counteracts mutual pivoting movement between a forward vehicle element (2) and a rear vehicle element (3) which is connected to the forward vehicle element via an articulated coupling (20), which damping system comprises:
- one or more damping means (30a, 30b) situated close to the articulated coupling (20) and adapted to exerting an adjustable damping force which counteracts mutual pivoting movement between the forward vehicle element (2) and the rear vehicle element (3), and
- an electronic control device (34) for controlling the damping force of the respective damping means (30a, 30b) on the basis of at least the speed of the vehicle and one or more parameters related to the articulation angle (α) between the forward vehicle element (2) and the rear vehicle element (3),
**characterised in that**:
- the control device (34) is adapted to determining, on the basis of one or more parameters related to the articulation angle (α) between the forward vehicle element (2) and the rear vehicle element (3), possibly in combination with one or more further parameters, whether there is a risk situation with regard to mutual outswing between the forward vehicle element and the rear vehicle element,
- in a normal state, when there is no such risk situation, the control device (34) is adapted to causing the respective damping means (30a, 30b) to exert a damping force which is pulsated, in order thereby to facilitate mutual straightening up between the forward vehicle element (2) and the rear vehicle element (3) after outswing of either of these vehicle elements relative to the other, and
- the control device (34), when it finds that there is such a risk situation, is adapted to causing the respective damping means to exert a damping force which is non-pulsated and stronger than the damping force in the normal state, in order thereby temporarily to prevent the articulation angle (α) between the forward vehicle element and the rear vehicle element from increasing, and thereafter to cause the respective damping means (30a, 30b) to revert to the normal state with pulsated damping force of reduced strength.

8. A method according to claim 7, **characterised in that** at the time of return to normal state the damping force of the respective damping means (30a, 30b) is reduced gradually and is at the same time pulsated.

9. A method according to claim 8, **characterised in that** the length of time (Δt) for said gradual reduction of the damping force of the respective damping means (30a, 30b) is determined by the control device (34) on the basis of the speed of the vehicle, which length of time is preferably between 1 and 3 seconds.

10. A method according to any one of claims 7-9, **characterised in that**:
- the control device (34) determines or receives an articulation angle velocity value (V_{α̇}) representing the angular velocity between the forward vehicle element (2) and the rear vehicle element (3) and compares this articulation angle velocity value (V_{α̇}) with a limit value (V_{G}), the magnitude of which depends on the speed of the vehicle, and
- the control device (34) finds that there is said risk situation when said articulation angle velocity value (V_{α̇}) exceeds said limit value (V_{G}).

11. A damping system according to claim 10, **characterised in that** return to normal state is initiated by the control device (34) after it finds that said articulation angle velocity value (V_{α̇}) is lower than said limit value (V_{G}).

12. A computer programme product comprising computer programme code for causing an electronic control unit of an articulated vehicle provided with a damping system which comprises one or more damping means situated close to an articulated coupling of the vehicle, the respective damping means being adapted to exerting an adjustable damping force which counteracts mutual pivoting movement between a forward vehicle element of the vehicle and a rear vehicle element which is connected to the forward vehicle element via the articulated coupling, to:
- control the damping force of the respective damping means on the basis of at least the speed of the vehicle and one or more parameters related to the articulation angle (α) between the forward vehicle element and the rear vehicle element,
- determine, on the basis of one or more parameters related to the articulation angle (α) between the forward vehicle element and the rear vehicle element, possibly in combination with one or more parameters, whether there is a risk situation with regard to mutual outswing between the forward vehicle element and the rear vehicle element,
- in a normal state, when there is no such risk situation, cause the respective damping means to exert a damping force which is pulsated, in order thereby to facilitate mutual straightening up between the forward vehicle element and the rear vehicle element after outswing of either of these vehicle elements relative to the other, and
- when it is found that there is such a risk situation, cause the respective damping means to exert a damping force which is non-pulsated and stronger than the damping force in the normal state, in order thereby temporarily to prevent the articulation angle (α) between the forward vehicle element and the rear vehicle element from increasing, and thereafter cause the respective damping means to revert to the normal state with pulsated damping force of reduced strength.

13. A computer programme product according to claim 12, **characterised in that** the computer programme product comprises a data storage medium readable by an electronic control unit, said computer programme code being stored on the data storage medium.

14. An electronic control unit of an articulated vehicle comprising an execution means (41), a memory (43) connected to the execution means and a data storage medium (44) connected to the execution means, the computer programme code of a computer programme product according to claim 12 being stored on said data storage medium (44).

## Patentansprüche

1. Dämpfungssystem, um einer Schwenkbewegung zwischen einem vorderen Fahrzeugelement eines Gelenkfahrzeugs und einem hinteren Fahrzeugelement entgegenzuwirken, das über eine Gelenkverbindung mit dem vorderen Fahrzeugelement verbunden ist, wobei das Dämpfungssystem umfasst:
- ein oder mehrere in Gelenkverbindungsnähe angeordnete Dämpfungsmittel (30a, 30b) zum Ausüben einer einstellbaren Dämpfungskraft, die der Schwenkbewegung zwischen dem vorderen Fahrzeugelement und dem hinteren Fahrzeugelement entgegenwirkt, und
- eine elektronische Steuerungseinheit (34) zum Steuern der Dämpfungskraft der jeweiligen Dämpfungsmittel (30a, 30b) auf Grundlage zumindest der Fahrzeuggeschwindigkeit und eines oder mehrerer Parameter, die einen Gelenkwinkel (α) zwischen dem vorderen Fahrzeugelement und dem hinteren Fahrzeugelement betreffen,
**dadurch gekennzeichnet, dass**:
- die Steuerungseinheit (34) dazu eingerichtet ist, auf Grundlage eines oder mehrerer Parameter, die den Gelenkwinkel (α) zwischen dem vorderen Fahrzeugelement und dem hinteren Fahrzeugelement betreffen, gegebenenfalls in Verbindung mit einem oder mehrerer weiterer Parameter, zu ermitteln, ob eine Risikosituation bezogen auf ein gegenseitiges Ausschwenken zwischen dem vorderen Fahrzeugelement und dem hinteren Fahrzeugelement vorhanden ist,
- in einem Normalzustand, wenn eine derartige Risikosituation nicht vorhanden ist, die Steuerungseinheit (34) dazu eingerichtet ist, die jeweiligen Dämpfungsmittel (30a, 30b) dazu zu veranlassen, eine pulsierende Dämpfungskraft auszuüben, um dadurch nach einem Ausschwenken eines dieser Fahrzeugelemente relativ zu dem anderen ein gegenseitiges Ausrichten zwischen dem vorderen Fahrzeugelement und dem hinteren Fahrzeugelement zu vereinfachen, und
- die Steuerungseinheit (34) dazu eingerichtet ist, wenn diese ermittelt, dass eine solche Risikosituation vorhanden ist, die jeweiligen Dämpfungsmittel (30a, 30b) dazu zu veranlassen, eine Dämpfungskraft auszuüben, die nicht pulsierend und stärker ist als die Dämpfungskraft in dem Normalzustand, um dadurch den Gelenkwinkel (α) zwischen dem vorderen Fahrzeugelement und dem hinteren Fahrzeugelement zeitweise vor einem Ansteigen zu bewahren, und daraufhin die jeweiligen Dämpfungsmittel (30a, 30b) dazu zu veranlassen, in den Normalzustand mit pulsierender Dämpfungskraft reduzierter Stärke zurückzukehren.

2. Dämpfungssystem nach Anspruch 1, **dadurch gekennzeichnet, dass** die Steuerungseinheit (34) dazu eingerichtet ist, die jeweiligen Dämpfungsmittel (30a, 30b) derart zu steuern, dass die Dämpfungskraft beim Zurückkehren in den Normalzustand stufenweise reduziert wird und gleichzeitig pulsiert.

3. Dämpfungssystem nach Anspruch 2, **dadurch gekennzeichnet, dass** die Steuerungseinheit (34) dazu eingerichtet ist, die Zeitdauer (Δt) der stufenweisen Reduktion der Dämpfungskraft der jeweiligen Dämpfungsmittel (30a, 30b) auf Grundlage der Fahrzeuggeschwindigkeit zu ermitteln, wobei die Zeitdauer vorzugsweise zwischen 1 und 3 Sekunden beträgt.

4. Dämpfungssystem nach einem der vorangegangenen Ansprüche 1 bis 3, **dadurch gekennzeichnet, dass**:
- die Steuerungseinheit (34) dazu eingerichtet ist, einen Gelenkwinkelgeschwindigkeitswert (V_{α̇}) zu ermitteln oder zu empfangen, der die Winkelgeschwindigkeit zwischen dem vorderen Fahrzeugelement und dem hinteren Fahrzeugelement anzeigt, und diesen Gelenkwinkelgeschwindigkeitswert (V_{α̇}) mit einem Grenzwert (V_{G}) zu vergleichen, dessen Größe von der Fahrzeuggeschwindigkeit abhängt, und
- die Steuerungseinheit (34) dazu eingerichtet ist, zu erkennen, dass die Risikosituation vorhanden ist, wenn der Gelenkwinkelgeschwindigkeitswert (V_{ά}) den Grenzwert (V_{G}) überschreitet.

5. Dämpfungssystem nach Anspruch 4, **dadurch gekennzeichnet, dass** die Steuerungseinheit (34) dazu eingerichtet ist, ein Zurückkehren in den Normalzustand einzuleiten, nachdem diese erkannt hat, dass der Gelenkwinkelgeschwindigkeitswert (V_{ά}) kleiner ist als der Grenzwert (V_{G}).

6. Dämpfungssystem nach einem der Ansprüche 1 bis 5, **dadurch gekennzeichnet, dass**:
- das Dämpfungssystem zwei Dämpfungsmittel (30a, 30b) umfasst, die in Gelenkverbindungsnähe an den jeweiligen Seiten der Fahrzeuglängsachse angeordnet sind, und
- die Steuerungseinheit (34) in dem Normalzustand dazu eingerichtet ist, die Dämpfungsmittel (30a, 30b) dazu zu veranlassen, mit gegenseitig versetzten Dämpfungskraftimpulsen zu pulsieren, sodass sich zwischen zwei Dämpfungskraftimpulsen jeweils nur ein Dämpfungsmittel in einem inaktiven Zustand befindet.

7. Verfahren zum Regeln der Kraft mit der ein Dämpfungssystem eines Gelenkfahrzeugs (1) einer Schwenkbewegung zwischen einem vorderen Fahrzeugelement (2) und einem mit dem vorderen Fahrzeugelement über eine Gelenkverbindung (20) verbundenen hinteren Fahrzeugelement (3) entgegenwirkt, wobei das Dämpfungssystem umfasst:
- ein oder mehrere in Gelenkverbindungsnähe angeordnete Dämpfungsmittel (30a, 30b) zum Ausüben einer einstellbaren Dämpfungskraft, die der Schwenkbewegung zwischen dem vorderen Fahrzeugelement (2) und dem hinteren Fahrzeugelement (3) entgegenwirkt, und
- eine elektronische Steuerungseinheit (34) zum Steuern der Dämpfungskraft der jeweiligen Dämpfungsmittel (30a, 30b) auf Grundlage zumindest der Fahrzeuggeschwindigkeit und eines oder mehrerer Parameter, die einen Gelenkwinkel (α) zwischen dem vorderen Fahrzeugelement (2) und dem hinteren Fahrzeugelement (3) betreffen,
**dadurch gekennzeichnet, dass**:
- die Steuerungseinheit (34) dazu eingerichtet ist, auf Grundlage eines oder mehrerer Parameter, die den Gelenkwinkel (α) zwischen dem vorderen Fahrzeugelement (2) und dem hinteren Fahrzeugelement (3) betreffen, gegebenenfalls in Verbindung mit einem oder mehrerer weiterer Parameter, zu ermitteln, ob eine Risikosituation bezogen auf ein gegenseitiges Ausschwenken zwischen dem vorderen Fahrzeugelement und dem hinteren Fahrzeugelement vorhanden ist,
- in einem Normalzustand, wenn eine derartige Risikosituation nicht vorhanden ist, die Steuerungseinheit (34) dazu eingerichtet ist, die jeweiligen Dämpfungsmittel (30a, 30b) dazu zu veranlassen, eine pulsierende Dämpfungskraft auszuüben, um dadurch nach einem Ausschwenken eines dieser Fahrzeugelemente relativ zu dem anderen ein gegenseitiges Ausrichten zwischen dem vorderen Fahrzeugelement (2) und dem hinteren Fahrzeugelement (3) zu vereinfachen, und
- die Steuerungseinheit (34) dazu eingerichtet ist, wenn diese ermittelt, dass eine solche Risikosituation vorhanden ist, die jeweiligen Dämpfungsmittel (30a, 30b) dazu zu veranlassen, eine Dämpfungskraft auszuüben, die nicht pulsierend und stärker ist als die Dämpfungskraft in dem Normalzustand, um dadurch den Gelenkwinkel (α) zwischen dem vorderen Fahrzeugelement und dem hinteren Fahrzeugelement zeitweise vor einem Ansteigen zu bewahren, und daraufhin die jeweiligen Dämpfungsmittel (30a, 30b) dazu zu veranlassen, in den Normalzustand mit pulsierender Dämpfungskraft reduzierter Stärke zurückzukehren.

8. Verfahren nach Anspruch 7, **dadurch gekennzeichnet, dass** die Dämpfungskraft der jeweiligen Dämpfungsmittel (30a, 30b) beim Zurückkehren in den Normalzustand stufenweise reduziert wird und gleichzeitig pulsiert.

9. Verfahren nach Anspruch 8, **dadurch gekennzeichnet, dass** die Zeitdauer (Δt) der stufenweisen Reduktion der Dämpfungskraft der jeweiligen Dämpfungsmittel (30a, 30b) durch die Steuerungseinheit (34) auf Grundlage der Fahrzeuggeschwindigkeit ermittelt wird, wobei die Zeitdauer vorzugsweise zwischen 1 und 3 Sekunden beträgt.

10. Verfahren nach einem der Ansprüche 7 bis 9, **dadurch gekennzeichnet, dass**:
- die Steuerungseinheit (34) einen die Winkelgeschwindigkeit zwischen dem vorderen Fahrzeugelement (2) und dem hinteren Fahrzeugelement (3) anzeigenden Gelenkwinkelgeschwindigkeitswert (V_{ά}) ermittelt oder empfängt und diesen Gelenkwinkelgeschwindigkeitswert (V_{ά}) mit einem Grenzwert (V_{G}) vergleicht, dessen Größe von der Fahrzeuggeschwindigkeit abhängt, und
- die Steuerungseinheit (34) erkennt, dass die Risikosituation vorhanden ist, wenn der Gelenkwinkelgeschwindigkeitswert (V_{ά}) den Grenzwert (V_{G}) überschreitet.

11. Dämpfungssystem nach Anspruch 10, **dadurch gekennzeichnet, dass** das Zurückkehren in den Normalzustand durch die Steuerungseinheit (34) eingeleitet wird, nachdem diese ermittelt, dass der Gelenkwinkelgeschwindigkeitswert (V_{ά}) kleiner ist als der Grenzwert (V_{G}).

12. Computerprogrammprodukt, das einen Computerprogrammcode umfasst, der dazu eingerichtet ist, eine elektronische Steuerungseinheit eines Gelenkfahrzeugs mit einem Dämpfungssystem, das ein oder mehrere Dämpfungsmittel umfasst, die in Gelenkverbindungsnähe des Fahrzeugs angeordnet sind, wobei die jeweiligen Dämpfungsmittel dazu eingerichtet sind, eine einstellbare Dämpfungskraft auszuüben, die einer Schwenkbewegung zwischen einem vorderen Fahrzeugelement des Fahrzeugs und einem mit dem vorderen Fahrzeugelement über die Gelenkverbindung verbundenen hinteren Fahrzeugelement entgegenwirkt, dazu zu veranlassen:
- die Dämpfungskraft der jeweiligen Dämpfungsmittel auf Grundlage zumindest der Fahrzeuggeschwindigkeit und eines oder mehrerer Parameter zu steuern, die den Gelenkwinkel (α) zwischen dem vorderen Fahrzeugelement und dem hinteren Fahrzeugelement betreffen,
- auf Grundlage zumindest eines oder mehrerer Parameter, die den Gelenkwinkel (α) zwischen dem vorderen Fahrzeugelement und dem hinteren Fahrzeugelement betreffen, gegebenenfalls in Verbindung mit einem oder mehrerer weiterer Parameter, zu ermitteln, ob eine Risikosituation bezogen auf ein gegenseitiges Ausschwingen zwischen dem vorderen Fahrzeugelement und dem hinteren Fahrzeugelement vorhanden ist,
- in einem Normalzustand, wenn eine solche Risikosituation nicht vorhanden ist, die jeweiligen Dämpfungsmittel dazu zu veranlassen, eine pulsierende Dämpfungskraft auszuüben, um dadurch nach einem Ausschwingen zumindest eines dieser Fahrzeugelemente relativ zu den anderen ein gegenseitiges Ausrichten zwischen dem vorderen Fahrzeugelement und dem hinteren Fahrzeugelement zu vereinfachen, und
- wenn erkannt wurde, dass eine solche Risikosituation vorhanden ist, die jeweiligen Dämpfungsmittel dazu zu veranlassen, eine Dämpfungskraft auszuüben, die nicht pulsiert und stärker ist als die Dämpfungskraft in dem Normalzustand, um dadurch den Gelenkwinkel (α) zwischen dem vorderen Fahrzeugelement und dem hinteren Fahrzeugelement zeitweise vor einem Ansteigen zu bewahren, und danach die jeweiligen Dämpfungsmittel dazu zu veranlassen, zu dem Normalzustand mit pulsierender Dämpfungskraft reduzierter Stärke zurückzukehren.

13. Computerprogrammprodukt nach Anspruch 12, **dadurch gekennzeichnet, dass** das Computerprogrammprodukt ein Datenspeichermedium umfasst, das durch eine elektronische Steuerungseinheit lesbar ist, wobei der Computerprogrammcode auf dem Datenspeichermedium gespeichert ist.

14. Elektronische Steuerungseinheit eines Gelenkfahrzeugs, die umfasst: eine Ausführungseinheit (41), einen mit der Ausführungseinheit verbundenen Speicher (43) und ein mit der Ausführungseinheit verbundenes Datenspeichermedium (44), wobei der Computerprogrammcode des Computerprogrammprodukts nach Anspruch 12 auf dem Datenspeichermedium (44) gespeichert ist.

## Revendications

1. Système d'amortissement pour contrecarrer un mouvement de pivotement mutuel entre un élément de véhicule avant d'un véhicule articulé et un élément de véhicule arrière qui est relié à l'élément de véhicule avant par l'intermédiaire d'un accouplement articulé, ce système d'amortissement comprenant :
- un ou plusieurs moyens d'amortissement (30a, 30b) situés à proximité de l'accouplement articulé, et adaptés de façon à exercer une force d'amortissement ajustable qui contrecarre un mouvement de pivotement mutuel entre l'élément de véhicule avant et l'élément de véhicule arrière, et
- un dispositif de commande électronique (34) pour commander la force d'amortissement des moyens d'amortissement respectifs (30a, 30b) en fonction, au moins, de la vitesse du véhicule et d'un ou de plusieurs paramètres associés à l'angle d'articulation (α) entre l'élément de véhicule avant et l'élément de véhicule arrière,
**caractérisé en ce que** :
- le dispositif de commande (34) est adapté de façon à déterminer, en fonction d'un ou de plusieurs paramètres associés à l'angle d'articulation (α) entre l'élément de véhicule avant et l'élément de véhicule arrière, éventuellement en combinaison avec un ou plusieurs autres paramètres, s'il y a une situation de risque vis-à-vis d'un déport mutuel entre l'élément de véhicule avant et l'élément de véhicule arrière,
- dans un état normal, en l'absence d'une telle situation de risque, le dispositif de commande (34) est adapté de façon à faire exercer par les moyens d'amortissement respectifs (30a, 30b) une force d'amortissement qui est pulsée, de façon à faciliter ainsi un redressement mutuel entre l'élément de véhicule avant et l'élément de véhicule arrière après un déport de l'un de ces éléments de véhicule par rapport à l'autre, et
- le dispositif de commande (34), lorsqu'il détermine qu'il y a une telle situation de risque, est adapté de façon à faire exercer par les moyens d'amortissement respectifs (30a, 30b) une force d'amortissement qui est non pulsée et plus forte que la force d'amortissement dans l'état normal, de façon à empêcher ainsi temporairement l'angle d'articulation (α) entre l'élément de véhicule avant et l'élément de véhicule arrière d'augmenter, puis à faire revenir ensuite les moyens d'amortissement respectifs (30a, 30b) à l'état normal avec une force d'amortissement pulsée de d'intensité réduite.

2. Système d'amortissement selon la revendication 1, **caractérisé en ce que** le dispositif de commande (34) est adapté de façon à commander les moyens d'amortissement respectifs (30a, 30b) de telle sorte que la force d'amortissement au moment du retour à l'état normal soit réduite graduellement, et soit, en même temps, pulsée.

3. Système d'amortissement selon la revendication 2, **caractérisé en ce que** le dispositif de commande (34) est adapté de façon à déterminer l'intervalle de temps (Δt) de ladite réduction graduelle de la force d'amortissement des moyens d'amortissement respectifs (30a, 30b) en fonction de la vitesse du véhicule, cet intervalle de temps étant de préférence entre 1 et 3 secondes.

4. Système d'amortissement selon l'une quelconque des revendications 1 à 3, **caractérisé en ce que** :
- le dispositif de commande (34) est adapté de façon à déterminer ou à recevoir une valeur de vitesse d'angle d'articulation (V_{ά}) représentant la vitesse angulaire entre l'élément de véhicule avant et l'élément de véhicule arrière, et compare cette valeur de vitesse d'angle d'articulation (V_{ά}) à une valeur limite (V_{G}), dont la grandeur dépend de la vitesse du véhicule, et
- le dispositif de commande (34) est adapté de façon à déterminer qu'il y a ladite situation de risque lorsque ladite valeur de vitesse d'angle d'articulation (V_{ά}) dépasse ladite valeur limite (V_{G}).

5. Système d'amortissement selon la revendication 4, **caractérisé en ce que** le dispositif de commande (34) est adapté de façon à déclencher un retour à l'état normal après qu'il a déterminé que ladite valeur de vitesse d'angle d'articulation (V_{ά}) est inférieure à ladite valeur limite (V_{G}).

6. Système d'amortissement selon l'une quelconque des revendications 1 à 5, **caractérisé en ce que** :
- le système d'amortissement comprend deux moyens d'amortissement (30a, 30b) situés à proximité de l'accouplement articulé sur les côtés respectifs de l'axe longitudinal du véhicule, et
- dans ledit état normal, le dispositif de commande (34) est adapté de façon à faire pulser les moyens d'amortissement (30a, 30b) avec des impulsions de force d'amortissement mutuellement décalées, de telle sorte qu'un seul moyen d'amortissement à la fois soit dans un état inactif entre deux impulsions de force d'amortissement.

7. Procédé pour réguler la force avec laquelle un système d'amortissement d'un véhicule articulé (1) contrecarre un mouvement de pivotement mutuel entre un élément de véhicule avant (2) et un élément de véhicule arrière (3) qui est relié à l'élément de véhicule avant par l'intermédiaire d'un accouplement articulé (20), ce système d'amortissement comprenant :
- un ou plusieurs moyens d'amortissement (30a, 30b) situés à proximité de l'accouplement articulé (20), et adaptés de façon à exercer une force d'amortissement ajustable qui contrecarre un mouvement de pivotement mutuel entre l'élément de véhicule avant (2) et l'élément de véhicule arrière (3), et
- un dispositif de commande électronique (34) pour commander la force d'amortissement des moyens d'amortissement respectifs (30a, 30b) en fonction, au moins, de la vitesse du véhicule et d'un ou de plusieurs paramètres associés à l'angle d'articulation (α) entre l'élément de véhicule avant (2) et l'élément de véhicule arrière (3),
**caractérisé en ce que** :
- le dispositif de commande (34) est adapté de façon à déterminer, en fonction d'un ou de plusieurs paramètres associés à l'angle d'articulation (a) entre l'élément de véhicule avant (2) et l'élément de véhicule arrière (3), éventuellement en combinaison avec un ou plusieurs autres paramètres, s'il y a une situation de risque vis-à-vis d'un déport mutuel entre l'élément de véhicule avant et l'élément de véhicule arrière,
- dans un état normal, en l'absence une telle situation de risque, le dispositif de commande (34) est adapté de façon à faire exercer par les moyens d'amortissement respectifs (30a, 30b) une force d'amortissement qui est pulsée, de façon à faciliter ainsi un redressement mutuel entre l'élément de véhicule avant (2) et l'élément de véhicule arrière (3) après le déport de l'un de ces éléments de véhicule par rapport à l'autre, et
- le dispositif de commande (34), lorsqu'il détermine qu'il y a une telle situation de risque, est adapté de façon à faire exercer par les moyens d'amortissement respectifs une force d'amortissement qui est non pulsée et plus forte que la force d'amortissement dans l'état normal, de façon à empêcher ainsi temporairement l'angle d'articulation (α) entre l'élément de véhicule avant et l'élément de véhicule arrière d'augmenter, puis à faire revenir ensuite les moyens d'amortissement respectifs (30a, 30b) à l'état normal avec une force d'amortissement pulsée d'intensité réduite.

8. Procédé selon la revendication 7, **caractérisé en ce qu'**au moment du retour à l'état normal, la force d'amortissement des moyens d'amortissement respectifs (30a, 30b) est réduite graduellement, et est, en même temps, pulsée.

9. Procédé selon la revendication 8, **caractérisé en ce que** l'intervalle de temps (Δt) pour ladite réduction graduelle de la force d'amortissement des moyens d'amortissement respectifs (30a, 30b) est déterminée par le dispositif de commande (34) en fonction de la vitesse du véhicule, cet intervalle de temps étant de préférence entre 1 et 3 secondes.

10. Procédé selon l'une quelconque des revendications 7 à 9, **caractérisé en ce que** :
- le dispositif de commande (34) détermine ou reçoit une valeur de vitesse d'angle d'articulation (V_{ά}) représentant la vitesse angulaire entre l'élément de véhicule avant (2) et l'élément de véhicule arrière (3), et compare cette valeur de vitesse d'angle d'articulation (V_{ά}) à une valeur limite (V_{G}), dont la grandeur dépend de la vitesse du véhicule, et
- le dispositif de commande (34) détermine qu'il existe ladite situation de risque lorsque ladite valeur de vitesse d'angle d'articulation (V_{ά}) dépasse ladite valeur limite (V_{G}).

11. Système d'amortissement selon la revendication 10, **caractérisé en ce que** le retour à l'état normal est déclenché par le dispositif de commande (34) après qu'il a déterminé que ladite valeur de vitesse d'angle d'articulation (V_{ά}) est inférieure à ladite valeur limite (V_{G}).

12. Produit de programme informatique comprenant un code de programme informatique pour faire effectuer par une unité de commande électronique d'un véhicule articulé muni d'un système d'amortissement qui comprend un ou plusieurs moyens d'amortissement situés à proximité d'un accouplement articulé du véhicule, les moyens d'amortissement respectifs étant adaptés de façon à exercer une force d'amortissement ajustable qui contrecarre un mouvement de pivotement mutuel entre un élément de véhicule avant du véhicule et un élément de véhicule arrière qui est relié à l'élément de véhicule avant par l'intermédiaire de l'accouplement articulé :
- la commande de la force d'amortissement des moyens d'amortissement respectifs en fonction, au moins, de la vitesse du véhicule et d'un ou de plusieurs paramètres associés à l'angle d'articulation (α) entre l'élément de véhicule avant et l'élément de véhicule arrière,
- la détermination, en fonction d'un ou de plusieurs paramètres associés à l'angle d'articulation (α) entre l'élément de véhicule avant et l'élément de véhicule arrière, éventuellement en combinaison avec un ou plusieurs paramètres, du fait qu'il y a une situation de risque vis-à-vis d'un déport mutuel entre l'élément de véhicule avant et l'élément de véhicule arrière,
- dans un état normal, en l'absence d'une telle situation de risque, le fait d'amener les moyens d'amortissement respectifs à exercer une force d'amortissement qui est pulsée, de façon à faciliter ainsi le redressement mutuel entre l'élément de véhicule avant et l'élément de véhicule arrière après le déport de l'un de ces éléments de véhicule par rapport à l'autre, et
- lorsqu'il est déterminé qu'il y a une telle situation de risque, le fait de faire exercer par les moyens d'amortissement respectifs une force d'amortissement qui est non pulsée et plus forte que la force d'amortissement dans l'état normal, de façon à empêcher ainsi temporairement l'angle d'articulation (α) entre l'élément de véhicule avant et l'élément de véhicule arrière d'augmenter, puis le fait d'amener ensuite les moyens d'amortissement respectifs à revenir à l'état normal avec une force d'amortissement pulsée d'intensité réduite.

13. Produit de programme informatique selon la revendication 12, **caractérisé en ce que** le produit de programme informatique comprend un support de mémorisation de données lisible par une unité de commande électronique, ledit code de programme informatique étant mémorisé sur le support de mémorisation de données.

14. Unité de commande électronique d'un véhicule articulé, comprenant des moyens d'exécution (41), une mémoire (43) connectée aux moyens d'exécution et un support de mémorisation de données (44) connecté aux moyens d'exécution, le code de programme informatique d'un produit de programme informatique selon la revendication 12 étant mémorisé sur ledit support de mémorisation de données (44).
